# EUROPÄISCHE PATENTSCHRIFT

(11) **EP 0 993 488 B1**
(45) Veröffentlichungstag und Bekanntmachung des Hinweises auf die Patenterteilung: **16.04.2003**
(21) Anmeldenummer: 98939510.8
(22) Anmeldetag: 17.06.1998
(51) Int. Cl.: C08K 3/04, C08L 83/07

(54) **VERNETZBARE FLÜSSIGE SILIKONKAUTSCHUKMISCHUNGEN, EIN VERFAHREN ZU DEREN HERSTELLUNG, EIN VERFAHREN ZUR HERSTELLUNG VON ELEKTRISCH LEITFÄHIGEN KONTAKTPUNKTEN UND DEREN VERWENDUNG**
CROSS-LINKABLE LIQUID SILICON RUBBER MIXTURES, METHOD FOR THE PRODUCTION THEREOF, METHOD FOR PRODUCING ELECTRICALLY CONDUCTIVE CONTACT POINTS AND THE USE THEREOF
MELANGES DE CAOUTCHOUC DE SILICONE LIQUIDES RETICULABLES, PROCEDE POUR LEUR PREPARATION, PROCEDE POUR LA PRODUCTION DE POINTS DE CONTACTS ELECTROCONDUCTEURS ET LEUR UTILISATION

(30) Priorität: 30.06.1997 DE 19727526
(43) Veröffentlichungstag der Anmeldung: 19.04.2000
(73) Patentinhaber: GE Bayer Silicones GmbH & Co. KG, 40699 Erkrath (DE)
(72) Erfinder: WROBEL, Dieter, D-51375 Leverkusen (DE); NAUMANN, Thomas, D-51371 Leverkusen (DE); POHMER, Klaus, D-51373 Leverkusen (DE)
(86) Internationale Anmeldenummer: EP9803651
(87) Internationale Veröffentlichungsnummer: WO99001503

(56) Entgegenhaltungen:
- EP-A- 0 005 455
- WO-A-97/10291

## Beschreibung

Die vorliegende Erfindung betrifft vernetzbare flüssige Silikonkautschukmischungen, ein Verfahren zu deren Herstellung, ein Verfahren zur Herstellung von elektrisch leitfähigen Kontaktpunkten und deren Verwendung.

Es ist bekannt, vernetzbare Silikonkautschukmischungen, die im ausgehärteten Zustand elektrisch leitfähig sind, für die Herstellung von Schaltmatten mit elektrisch leitfähigen Kontaktpunkten zu verwenden. In der US-A 4 442 055 wird z.B. ein sehr aufwendiges Verfahren beschrieben, bei dem zunächst die Kontaktpunkte angespritzt und vulkanisiert werden und anschließend der nicht leitfähige Teil gespritzt und vulkanisiert wird. Dieses Verfahren erfordert sehr hohe Maschineninvestitionen und ist sehr unflexibel bei Designänderungen. Ähnliche Nachteile (wie hohe Investitionen, problematische Qualitätssicherung oder mangelnde Flexibilität bei Designänderung) treten auch beim automatisierten oder manuellen Einlegen ausgestanzter Pillen aus vulkanisierten Platten eines elektrisch leitfähigen Silikonkautschuks auf. Eine weitere Alternative zum Anbringen der elektrisch leitfähigen Kontaktpunkte stellt der Siebdruck oder das Tampondruckverfahren dar. Auch diese Verfahren besitzen wegen der geringen Schichtdicken und daraus folgender geringer Kontaktwiderstände Nachteile. Die geforderten niedrigen Kontaktwiderstände können nur durch mehrfaches Bedrucken und Einbrennen erreicht werden.

Aus der EP-A-0005455 und der WO 97/10291 sind ruß-haltige Silikonkautschuk-Zusammensetzungen bekannt.

Aufgabe der vorliegenden Erfindung ist daher die Bereitstellung geeigneter vernetzbarer Silikonkautschukmischungen die kostengünstig appliziert werden können und die Nachteile der bisherigen Systeme nicht aufweisen.

Es wurde nun gefunden, daß flüssige vernetzbare Silikonkautschukmischungen, die ein geeignetes verdampfbares Lösungsmittel und Ruß enthalten, die Aufgabe lösen und gleichzeitig auch für großflächige Beschichtungen (z.B. von Hochspannungsbauteilen) geeignet sind.

Gegenstand der Erfindung sind daher flüssige vernetzbare Silikonkautschukmischungen, bestehend aus
a) mindestens einem vernetzbaren Organopolysiloxan,
b) mindestens einem Vernetzungsmittel
b) Ruß und
d) mindestens einem Lösungsmittel mit einem Siedepunkt zwischen 160 und 250°C, worin die Komponenten a), b) und d) wie im Anspruch 1 definiert sind.

Es handelt sich bei a) um ein Siloxan aus Einheiten der allgemeinen Formel (1)

(R¹)ₐ(R²)_{b}SiO_{(4-a-b)/2} (I)

in denen
R¹ einen einwertigen aliphatischen Rest mit 1 bis 8 Kohlenstoffatomen und
R² einen Alkenylrest mit 2 bis 8 Kohlenstoffatomen bedeutet,
a 0, 1, 2 oder 3,
b 0, 1 oder 2
und die Summe a+b = 0, 1, 2 oder 3 ist,
mit der Maßgabe, daß durchschnittlich mindestens zwei Reste R² pro Molekül vorliegen. Vorzugsweise ist a) dimethylvinylsiloxyendgestoppt.

In einer bevorzugten Ausführungsform der Erfindung weisen die erfindungsgemäßen Organopolysiloxane a) Viskositäten von 0,01 bis 200 Pas, ganz besonders bevorzugt 0,2 bis 200 Pas auf.

Die Viskositäten werden gemäß DIN 53 019 (= ISO DIS 8961) bei 20°C bestimmt.

Herstellungsbedingt können insbesondere bei den verzweigten Polymeren, die auch in Lösungsmitteln gelöste Festharze sein können, noch bis maximal 10 Mol% aller Si-Atome Alkoxyoder OH-Gruppen aufweisen.

Vernetzungsmittel b) im Sinne der Erfindung sind lineare, cyclische oder verzweigte Organopolysiloxane aus Einheiten der allgemeinen Formel (II)

(R¹)_{c}(H)_{d}SiO_{(4-c-d)/2} (II)

in denen
R¹ ein einwertiger aliphatischer Rest mit 1 bis 8 Kohlenstoffatomen,
c = 0, 1, 2 oder 3
d = 0, 1 oder 2,
und die Summe c+d = 0, 1, 2 oder 3 ist,
mit der Maßgabe, daß durchschnittlich mindestens drei Si-gebundene Wasserstoffatome je Molekül vorliegen, in Kombination mit einem Platinkatalysator und gegebenenfalls einem Inhibitor.

Die Hydrogensiloxane b) besitzen vorzugsweise eine Viskosität von 0,01 bis 5 Pas.

In einer weiteren Ausführungsform der Erfindung ist das Vernetzungsmittel b) ein Peroxid, wie z.B. Aroyl- oder Dialkylperoxid. Beispiele hierfür sind 2,4-Dichlor-benzoylperoxid, 4-Methylbenzoylperoxid, Dicumylperoxid und/oder 2,5-Bis-tert.butylperoxo-2, 5-dimethylhexan.

Wenn Organopolysiloxane mit Si-gebundenen Wasserstoffatomen als Vernetzer eingesetzt werden, dann werden als Katalysatoren für die Vernetzungsreaktion vorzugsweise Pt(0)-Komplexe mit Alkenylsiloxanen als Liganden in katalytischen Mengen von 1 bis 100 ppm Pt eingesetzt. Pt(0)-Komplexe sind z.B. Pt(0) mit den folgenden Liganden: 1,3-Divinyl-tetramethyldisiloxan oder 1,3,5,7-Tetravinyl-1,3,5,7tetramethylcyclotetrasiloxan. Zur Einstellung der Topfzeit können alle gängigen Verbindungen, die bisher für diesen Zweck eingesetzt wurden, verwendet werden. Beispiele für solche bevorzugten Inhibitoren sind z.B. 1,3-Divinyl-tetramethyldisiloxan, 1,3,5,7-Tetravinyl-1,3,5,7-tetramethylcyclotetrasiloxan, 2-Methylbutinol (2) oder 1-Ethinylcyclohexanol in Mengen von 50 bis 10.000 ppm.

Das Verhältnis der SiH-Gruppen in der Komponente b) zu den Alkenylgruppen in der Komponente a) beträgt vorzugsweise 1,2:1 bis 10:1.

Ruße c) im Sinne der Erfindung sind vorzugsweise feinteilige Ruße mit einer BETOberfläche von 50 bis 1200 m²/g.

Lösungsmittel d) sind lineare oder cyclische Polydimethylsiloxane bzw. Gemische daraus. Besonders bevorzugt ist Decamethylcyclopentasiloxan.

Als weitere Bestandteile können die Mischungen auch verstärkende Füllstoffe, wie z.B. feinteilige Kieselsäuren, enthalten, die gegebenenfalls hydrophobiert sind.

In einer bevorzugten Ausführungsform der Erfindung weist die vernetzbare Silikonkautschukmischung folgende Zusammensetzung auf.

3 bis 15 Gew.-% wenigstens eines alkenylgruppen-haltigen Polysiloxans a), 0,2 bis 3 Gew.% eines SiH-funktionellen Polysiloxans b),
0,001 bis 0,02 Gew.-% Platinkatalysator mit einem Gehalt von 15 Gew.-% Platin b),
0,001 bis 1 Gew.-% Inhibitor b),
1 bis 20 Gew.-% Ruß c) und
50 bis 95 Gew.-% Decamethylcyctopentasiloxan d), wobei die Summe 100 Gew.-% ergibt.

Gegenstand der Erfindung ist zudem ein Verfahren zur Herstellung der erfindungsgemäß vernetzbaren flüssigen Silikonkautschuke, wonach man zuerst eine Mischung aus mindestens einem vernetzbaren Organopolysiloxan a) sowie etwas Lösungsmittel d) herstellt, Ruß c) zudosiert, vermischt, den Rest an Lösemittel d) eindosiert, die Mischung in zwei Komponenten aufteilt, wobei in die erste der Platinkatalysator und in die zweite der SiH-funktionelle Vernetzer und der Inhibitor eingerührt wird und im Anschluß daran beide Komponenten zusammengeführt werden.

Geeignete Mischer sind z.B. Dissolver.

In einer besonders bevorzugten Ausführungsform des erfindungsgemäßen Verfahrens werden die Bestandteile in einem Mischer, z.B. Dissolver, vorgemischt und anschließend auf einem gut dispergierenden Aggregat (wie z.B. Dissolver, Dreiwalzenstuhl), das auch mit dem Vormischer identisch sein kann, homogenisiert mit der restlichen Lösungsmittelmenge und den anderen Komponenten vermischt.

Ein weiterer Gegenstand der Erfindung ist ein Verfahren zur Herstellung von elektrisch leitfähigen Kontaktpunkten, dadurch gekennzeichnet, daß Tropfen aus mindestens einem erfindungsgemäßen Silikonkautschuk eine Viskosität von 0,05 bis 10 Pas aufweisen, mit einer Dosierpumpe auf das Substrat appliziert und anschließend vulkanisiert werden.

Die erfindungsgemäßen Silikonkautschuke, die über eine höhere Viskosität als 10 Pas liegen, können über den Lösemittelanteil auf die gewünschte Viskosität verdünnt werden.

Als Dosierpumpen sind dabei alle Mikropumpen einsetzbar, die lösemittelhaltige Mischungen in kleinen Mengen (ca. 500 µl) dosieren können. Solche sind z.B. als Liquid Prozessoren im Handel erhältlich.

Das Aushärten kann dabei mittels Heißluftbehandlung oder durch IR-Bestrahlung erfolgen.

Die Heißluftbehandlung erfolgt je nach Dicke der Beschichtung vorzugsweise bei Temperaturen zwischen 100 und 200°C über einen Zeitraum von mindestens 1 Minute.

Für die IR-Bestrahlung wird vorzugsweise ein kurzwelliger IR-Strahler mit Goldreflektor mit mindestens 1000 Watt eingesetzt.

Ebenfalls Gegenstand der Erfindung ist die Verwendung der vernetzbaren flüssigen Silikonkautschuke als Antistatikum, z.B. für leitfähige Deckschichten für Hochspannungsteile (Isolatoren), oder zur Herstellung von elektrisch leitfähigen Kontaktpunkten für Schaltmatten.

Die nachfolgenden Beispiele, in denen alle Teile Gewichtsteile bedeuten, erläutern die Erfindung, ohne dabei jedoch beschränkend zu wirken.

### Ausführungsbeispiele

### Beispiel 1 (erfindungsgemäß)

In einem Dissolver wurden 37,5 Teile dimethylvinylsiloxendgestopptes Polydimethylsiloxan mit einer Viskosität von 10 Pas a), 51,9 Teile Decamethylcyclopentasiloxan (D5) (Siedepunkt = 210°C) d) mit 10,6 Teilen Ruß c) mit einer BET-Oberfläche von 990 m²/g in 20 Minuten verrührt und anschließend mit einem Dreiwalzenstuhl homogenisiert und anschließend mit 333 Teilen Decamethylcyclopentasiloxan (D5), d) 1,9 Teilen eines linearen Polymethylsiloxans mit einem SiH-Gehalt von 4,3 mmol SiH/g und einer Viskosität von 40 mPas, b) 0,016 Teile einer Platinkomplexverbindung mit Tetramethyltetravinylcyclotetrasiloxan als Liganden (Pt-Gehalt: 15 Gew.-%) und 0,056 Teile 1-Ethinylcyclohexan b) vermischt.

Der so hergestellte flüssige Silikonkautschuk wurde mit 25 % D5 verdünnt über eine Dosierpumpe, in einer Verteilerplatte mit Düsen (Durchmesser 0,5 mm) in einer Menge von ca. 5 µl/Düse mit einer Geschwindigkeit von 0,5 ml/s auf die Rückseite einer Schaltmatte auf die jeweiligen Plätze für die Kontaktpunkte aufgetragen und anschließend 3 s durch 10 minütige Heißluftbehandlung bei 150°C vulkanisiert.

Die so erhaltene Schaltmatte besaß eine glatte Oberfläche und zeigte beim Aufdrücken auf eine Leiterplatte mit Kupferleitungen im Abstand von 0,4 mm einen mittleren Kontaktwiderstand von 13 Ω.

### Beispiel 2 (Vergleichsbeispiel)

Gleicher Ansatz wie Beispiel 1 mit Xylol (Siedepunkt = 138 bis 144°C) statt D5.

Die so erhaltene Schaltmatte zeigte nach dem Einbrennen eine rissige Oberfläche der Kontaktpunkte. Die Risse sind nicht akzeptabel, da sich beim Gebrauch der Schaltmatten elektrisch leitfähige Partikel vom Substrat ablösen und Kurzschlüsse verursachen können. Ein weiterer Nachteil bestand in einer schon nach 10 Minuten aufgetretenen Verstopfung der Beschichtungsdüsen, da das Lösungsmittel Xylol an den Beschichtungsdüsenenden zu schnell verdampft.

## Patentansprüche

1. Vernetzbare flüssige Silikonkautschuke, bestehend im wesentlichen aus
a) mindestens einem vernetzbaren Organopolysiloxan,
b) mindestens einem Vernetzungsmittel,
c) Ruß und
d) mindestens einem Lösemittel mit einem Siedepunkt zwischen 160 und 250°C,
**dadurch gekennzeichnet, daß** das vemetzbare Organopolysiloxan a) mindestens ein Alkenylgruppen-haltiges Polysiloxan der Formel
(R¹)ₐ(R²)_{b}SiO_{(4-a-b)/2} (I)
ist,
in der
R¹ einen einwertigen aliphatischen Rest mit 1 bis 8 Kohlenstoffatomen und
R² einen Alkenylrest mit 2 bis 8 Kohlenstoffatomen bedeutet,
a = 0, 1, 2 oder 3,
b = 0, 1 oder 2
und die Summe a + b = 0, 1, 2 oder 3 ist,
mit der Maßgabe, daß durchschnittlich mindestens zwei Reste R² pro Molekül vorliegen,
das Vernetzungsmittel b) ein lineares, cyclisches oder verzweigtes Organopolysiloxan aus Einheiten der allgemeinen Formel (II)
(R¹)_{c}(H)_{d}SiO_{(4-c-d)/2} (II)
ist,
in der
R¹ ein einwertiger aliphatischer Rest mit 1 bis 8 Kohlenstoffatomen,
c = 0, 1, 2 oder 3,
d = 0, 1 oder 2,
und die Summe c + d = 0, 1, 2 oder 3 ist,
mit der Maßgabe, daß durchschnittlich mindestens drei Si-gebundene Wasserstoffatome je Molekül vorliegen, in Kombination mit einem Platinkatalysator und gegebenenfalls einem Inhibitor oder ein Peroxid ist, und das Lösemittel d) mindestens ein lineares oder cyclisches Polydimethylsiloxan ist.

2. Vernetzbare flüssige Silikonkautschuke nach Anspruch 1, **dadurch gekennzeichnet, daß** der Ruß eine BET-Oberfläche von 50 bis 1200 m²/g aufweist.

3. Vernetzbare flüssige Silikonkautschuke nach Anspruch 1, **dadurch gekennzeichnet, daß** das cyclische Polydimethylsiloxan Decamethylcyclopentasiloxan ist.

4. Vernetzbare flüssige Silikonkautschuke nach einem oder mehreren der Ansprüche 1 bis 3, **dadurch gekennzeichnet, daß** dieser zusätzliche noch verstärkende Füllstoffe enthält.

5. Vernetzbare flüssige Silikonkautschuke nach einem oder mehreren der Ansprüche 1 bis 4,
**dadurch gekennzeichnet, daß** dieser folgende Zusammensetzung aufweist:
3 bis 15 Gew.-% wenigstens eines Alkenylgruppen-haltigen Polysiloxans a),
0,2 bis 3 Gew.-% eines SiH-funktionellen Polysiloxans b),
0,001 bis 0,02 Gew.% Inhibitor b),
1 bis 20 Gew.-% Ruß c) und
50 bis 95 Gew.% Decamethylcyclopentasiloxan d).

6. Verfahren zur Herstellung von vernetzbaren flüssigen Silikonkautschuken nach einem oder mehreren der Ansprüche 1 bis 5, **dadurch gekennzeichnet, daß** man zuerst eine Mischung aus mindestens einem vernetzbaren Organopolysiloxan a) sowie etwas Lösemittel d) herstellt, Ruß c) zudosiert, vermischt, den Rest an Lösemittel d) eindosiert, die Mischung in zwei Komponenten aufteilt, wobei in die erste der Platinkatalysator und in die zweite der SiH-funktionelle Vernetzer und der Inhibitor eingerührt wird und im Anschluß daran beide Komponenten zusammengeführt werden.

7. Verfahren zur Herstellung von elektrisch leitfähigen Kontaktpunkten, **dadurch gekennzeichnet, daß** Tropfen aus mindestens einem Silikonkautschuk gemäß einem der Ansprüche 1 bis 5, die eine Viskosität von 0,05 bis 10 Pas aufweisen, mit einer Dosierpumpe auf das Substrat appliziert und anschließend vulkanisiert werden.

8. Verwendung der vernetzbaren flüssigen Silikonkautschuke nach einem oder mehreren der Ansprüche 1 bis 5 als Antistatikum oder zur Herstellung von elektrisch leitfähigen Kontaktpunkten.

## Claims

1. Crosslinkable liquid silicone rubbers consisting essentially of
a) at least one crosslinkable organopolysiloxane,
b) at least one crosslinker,
c) carbon black and
d) at least one solvent having a boiling point in the range from 160 to 250°C,
**characterized in that** the crosslinkable organopolysiloxane a) is at least one polysiloxane containing alkenyl groups and having the formula
(R¹)ₐ(R²)_{b}SiO_{(4-a-b)/2} (I),
where
R¹ is a monovalent aliphatic radical having from 1 to 8 carbon atoms and
R₂ is an alkenyl radical having from 2 to 8 carbon atoms,
a = 0, 1, 2 or 3,
b = 0, 1 or 2
and the sum a + b = 0, 1, 2 or 3,
with the proviso that on average at least two radicals R² are present per molecule,
the crosslinker b) is a linear, cyclic or branched organosiloxane comprising units of the general formula (II)
(R¹)_{c}(H)_{d}SiO_{(4-c-d)/2} (II),
where
R¹ is a monovalent aliphatic radical having from 1 to 8 carbon atoms,
c = 0, 1, 2 or 3,
d = 0, 1 or 2,
and the sum c + d = 0, 1, 2 or 3,
with the proviso that on average at least three Si-bonded hydrogen atoms are present per molecule, in combination with a platinum catalyst and, if desired, an inhibitor or is a peroxide, and the solvent d) is at least one linear or cyclic polydimethylsiloxane.

2. Crosslinkable liquid silicone rubbers according to Claim 1, **characterized in that** the carbon black has a BET surface area of from 50 to 1200 m²/g.

3. Crosslinkable liquid silicone rubbers according to Claim 1, **characterized in that** the cyclic polydimethylsiloxane is decamethylcyclopentasiloxane.

4. Crosslinkable liquid silicone rubbers according to one or more of Claims 1 to 3, **characterized in that** they additionally contain reinforcing fillers.

5. Crosslinkable liquid silicone rubbers according to one or more of Claims 1 to 4, **characterized in that** they have the following composition:
from 3 to 15% by weight of at least one polysiloxane a) containing alkenyl groups,
from 0.2 to 3% by weight of an SiH-functional polysiloxane b),
from 0.001 to 0.02% by weight of inhibitor b),
from 1 to 20% by weight of carbon black c) and
from 50 to 95% by weight of decamethylcyclopentasiloxane d).

6. Process for preparing crosslinkable liquid silicone rubbers according to one or more of Claims 1 to 5, **characterized in that** a mixture of at least one crosslinkable organopolysiloxane a) and some solvent d) is prepared first, carbon black c) is introduced, the constituents are mixed, the remainder of the solvent d) is introduced, the mixture is divided into two components, the platinum catalyst is stirred into the first component and the SiH-functional crosslinker and the inhibitor are stirred into the second component and the two components are subsequently combined.

7. Process for producing electrically conductive contact points, **characterized in that** drops of at least one silicone rubber according to any of Claims 1 to 5 which have a viscosity of from 0.05 to 10 Pas are applied to the substrate by means of a metering pump and are subsequently vulcanized.

8. Use of the crosslinkable liquid silicone rubbers according to one or more of Claims 1 to 5 as antistatic or for producing electrically conductive contact points.

## Revendications

1. Caoutchoucs de silicones liquides réticulables consistant essentiellement en
a) au moins un organopolysiloxane réticulable,
b) au moins un agent réticulant,
c) du noir de carbone, et
d) au moins un solvant dont le point d'ébullition se situe entre 160 et 250°C,
**caractérisés en ce que** l'organopolysiloxane réticulable a) consiste en au moins un polysiloxane à groupes alcényles de formule
(R¹)ₐ(R²)_{b}SiO_{(4-a-b)/2} (I)
dans laquelle
R¹ représente un radical aliphatique monovalent en C₁-C₈ et
R² représente un groupe alcényle en C₂-C₈,
a = 0, 1, 2 ou 3,
b= 0, 1 ou 2,
et la somme a + b est égale à 0, 1, 2 ou 3,
sous réserve qu'il y ait en moyenne au moins deux groupes R² par molécule,
l'agent réticulant b) consiste en un organopolysiloxane linéaire, cyclique ou ramifié constitué de motifs de formule générale (II)
(R¹)_{c}(H)_{d}SiO_{(4-c-d)/2} (II)
dans laquelle R¹ représente un radical aliphatique monovalent en C₁-C₈,
c = 0, 1, 2 ou 3,
b= 0, 1 ou 2,
et la somme c + d est égale à 0, 1, 2 ou 3,
sous réserve qu'il y ait en moyenne au moins trois atomes d'hydrogène fixés sur le silicium par molécule, en combinaison avec un catalyseur au platine et, le cas échéant, un inhibiteur ou un peroxyde, et le solvant d) consiste en au moins un polydiméthylsiloxane linéaire ou cyclique.

2. Caoutchoucs de silicones liquides réticulables selon la revendication 1, **caractérisés en ce que** le noir de carbone a une surface BET de 50 à 1 200 m²/g.

3. Caoutchoucs de silicones liquides réticulables selon la revendication 1, **caractérisés en ce que** le polydiméthylsiloxane cyclique est le décaméthylcyclopentasiloxane.

4. Caoutchoucs de silicones liquides réticulables selon une ou plusieurs des revendications 1 à 3, **caractérisés en ce qu'**ils contiennent en outre des matières de charge renforçantes.

5. Caoutchoucs de silicones liquides réticulables selon une ou plusieurs des revendications 1 à 4, **caractérisés en ce qu'**ils sont à la composition suivante :
3 à 15 % en poids d'au moins un polysiloxane à groupes alcényles a),
0,2 à 3 % en poids d'un polysiloxane à fonctions SiH b),
0,001 à 0,02 % en poids d'un inhibiteur b),
1 à 20 % en poids de noir de carbone c) et
50 à 95 % en poids du décaméthylcyclopentasiloxane d).

6. Procédé pour la préparation des caoutchoucs liquides réticulables selon une ou plusieurs des revendications 1 à 5, **caractérisé en ce que** l'on prépare d'abord un mélange d'au moins un organopolysiloxane réticulable a) et d'un peu du solvant d), on ajoute le noir de carbone c), on mélange, on ajoute le restant du solvant d), on partage le mélange en deux composants dans le premier desquels on introduit sous agitation le catalyseur au platine et dans le second desquels on ajoute sous agitation l'agent réticulant à fonctions SiH et l'inhibiteur, après quoi on mélange les deux composants.

7. Procédé pour la formation de points de contact conducteurs de l'électricité, **caractérisé en ce que** l'on applique sur le support, à l'aide d'une pompe doseuse, des gouttes d'au moins un caoutchouc de silicone selon l'une des revendications 1 à 5, à une viscosité de 0,05 à 10 Pa.s, puis on vulcanise.

8. Utilisation des caoutchoucs de silicone liquides réticulables selon une ou plusieurs des revendications 1 à 5 en tant qu'agents antistatiques ou pour la formation de points de contact conducteurs de l'électricité.
